# EUROPEAN PATENT SPECIFICATION

(11) **EP 0 446 011 B1**
(45) Date of publication and mention of the grant of the patent: **12.04.1995**
(21) Application number: 91301805.7
(22) Date of filing: 05.03.1991
(51) Int. Cl.: F24F 3/14, F24F 6/00

(54) **Humidification apparatus**
Befeuchtungseinrichtung
Appareil d'humidification

(30) Priority: 06.03.1990 GB 9004946
(43) Date of publication of application: 11.09.1991
(73) Proprietor: Honeywell Control Systems Ltd., Bracknell, Berkshire RG12 1EB (GB)
(72) Inventor: Morris, Brian Michael, Berkshire, RG12 1EB (GB)
(74) Representative: Fox-Male, Nicholas Vincent Humbert

(56) References cited:
- US-A- 4 382 433
- US-A- 4 572 428
- US-A- 4 671 456

## Description

The present invention relates to humidification apparatus especially but not solely for use in heating and ventilation systems for buildings, and to a method of operating such apparatus.

For many years, heating and ventilation systems for commercial buildings have used humidifiers incorporating water sprays or wet cells to generate the appropriate moisture in air. However such humidifiers tend to suffer from severe corrosion problems (especially in the ducts and ponds) after only a moderate amount of use and therefore have not been found very satisfactory. Moreover it is difficult, and often impossible, to regulate or accurately vary the degree of humidification or the quantity of humidified air according to requirements at any given instant.

Furthermore such humidifiers tend to harbour and proliferate water-borne bacteria, which can be a serious problem as operation of the humidifier causes the bacteria to be spread throughout the building. Recent enhanced awareness of the danger to the general public of certain water-borne bacteria, for example Legionella pneumophilia, has resulted in such humidifiers now being considered wholly unacceptable for use in new heating and ventilation systems.

An alternative form of humidifier utilises steam produced by electrically-operable package steam generators, thereby providing a readily controlled humidification process which minimises corrosion problems if installed and operated correctly and which was considered (until recently) to be inherently environmentally safe. However, the results of research conducted in the last year or so indicate that, although harmful bacteria present in the water may be killed and rendered inactive when the water is formed into steam, their bodies remain and are injected into the air stream together with the steam and so are carried into the occupied areas. In some cases this has caused, in susceptible people, a condition called "humidifier fever", symptoms of which include chestiness and congestion and which can be most unpleasant and dangerous especially if it affects a person who is already frail or in a weakened state.

Another substantial disadvantage of such steam humidifiers is that the generation of the steam consumes substantial power and so they have high running costs.

A further disadvantage is the very frequent and costly maintenance required by these humidifiers.

An object of the present invention is to provide humidification apparatus which overcomes the aforementioned disadvantages of the prior art.

According to the present invention, there is provided humidification apparatus comprising at least one nozzle means to effect mixing of water and air, control means to regulate the supply of water and air to the nozzle means, means to initiate the passage of water from a supply to the nozzle means after establishing an air flow at the nozzle means characterised by means to determine stabilisation of the air flow at the operating pressure, the stabilisation means having means to note that the air flow is at a predetermined air pressure a given time period after the predetermined pressure was first established, and the initiation means being operable in accordance with the stabilisation means indicating stability of the air pressure.

In this way, the present invention ensures that operation of the apparatus does not occur until the pressure of air at the nozzle is stable at the correct operating value. Accordingly, the invention prevents a situation wherein water, but little or no air, is supplied to the nozzle means, thereby ensuring that water does not leave the nozzle in a non-atomised form which would risk drops of water falling into (and congregating in) the ducting and hence causing infection or rusting. This arrangement also avoids the possibility of bacterial back-flow from water which had been left in the nozzle means after the previous use.

The given time period is preferably in the range 15 to 60 seconds, advantageously in the range 20 to 40 seconds.

Moreover, the present invention can provide apparatus enabling precise control of the humidification process and having very low running costs as no steam production is utilised.

There is shown in US Patent Specification 4572428 a humidifier system in which water is passed to the nozzle once a predetermined air flow pressure has been measured in the air supply conduit. However, such an arrangement does not guard against the large fluctuations and surges in air pressure which can occur during the start-up procedure of the system due to, inter alia, the conduit configuration, the nozzle design and the overlapping start-up of other systems. Accordingly, after the operating pressure is first attained and hence the water begins to flow, it is probable that the operating pressure will not be maintained and the actual air pressure might well decrease temporarily to below that value necessary to atomise the water, thereby causing non-atomised water to enter the conduit and risk the accumulation of water in the conduit.

In one form, the apparatus has means to shut-down the supply of water to the nozzle if the air pressure in the first conduit means reduces to a second predetermined pressure which may for example be in the range 0.75 to 0.95 of the predetermined pressure. Alternatively, the shut-down means may operate upon any reduction of pressure below the predetermined value.

Preferably, the humidification apparatus has a plurality of nozzle means each of which has a separate water reservoir linked to it to provide precise and continual metering of water to the respective nozzle means. The water reservoirs may be supplied from a common source.

Preferably, the humidification apparatus comprises means to filter and/or to effect heat treatment on the air and water supplied to the nozzle means, for example the water may be filtered and passed through an ultra-violet sterilisation unit, and the air may be dried.

The present invention also provides a method of operating humidification apparatus having at least one nozzle means to effect mixing of water and air comprising initiating the passage of water to the nozzle means after establishing an air flow at the nozzle means, the method characterised by determining stabilisation of the air flow at the operating pressure, noting that the air flow is at a predetermined air pressure a given time period after the predetermined pressure was first established, and then initiating the passage of water from a supply to the nozzle means.

Preferably, the stability determination stage comprises monitoring for a predetermined air pressure in a first conduit means for the passage of air from a supply to the nozzle means.

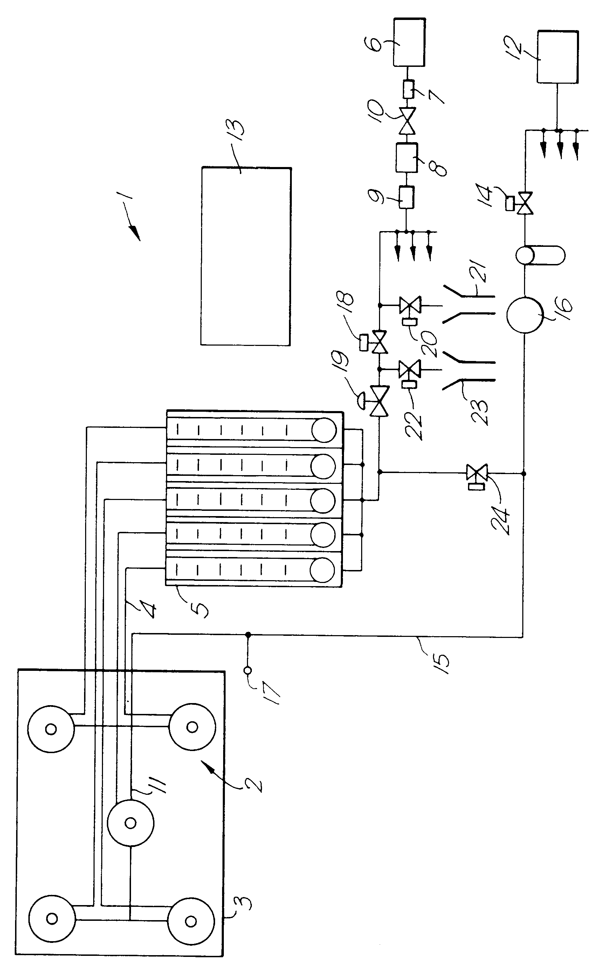

In order that the invention may more readily be understood, a description is now given, by way of example only, reference being made to the accompanying sole Figure illustrating a schematic diagram of a humidifier embodying the present invention.

There is shown a section of a humidifier, generally designated as 1, for use within a heating and ventilating system installed in a multi-storey office block. The humidifier is designed to provide typical operating conditions having a relative humidity of 40%, a return air temperature of 21°C with an air flow of 15 cubic metres per second, utilizing ducts of cross-section 500 mm by 2500 mm.

Humidifier 1 has twelve atomising nozzles 2 (for simplicity, only five being shown) mounted on a stainless steel frame such as to optimise moisture distribution over the duct cross-section. Each nozzle 2 has a pipe 4 connecting it with its respective individual flow meter/reservoir 5 to ensure correct and continuous supply of water. The nozzles and respective pipes are arranged such that, when the flow of water is cut-off, any water remaining in the nozzles and in the pipes is fed back under gravity and passes to drain via an activated outlet valve. The reservoirs 5 are fed from a town mains water supply 6 of 0.7m³ (160 gallons) per hour capacity after appropriate treatment comprising softening, cleansing by a pre-filter 7 and a high-efficiency filter 8 to remove solid material down to 100 microns and 0.2 microns respectively and then by an ultra-violet sterilization unit 9. A regulating valve 10 is provided between pre-filter 7 and filter 8.

The nozzles 2, grouped in fours, are connected into a three-armed sparge bar 9 which is fed from a compressed air supply 12, capable of supplying 4.9M³/min at 6.2x10⁵Pa (173 CFM at 90 psi), after appropriate drying and/or filtering.

Humidifier 1 has a central microprocessor control unit 13 connected to various sensors and actuator valves as indicated below in order to provide all the control operations and to monitor the humidifiers's actions so as to make any adjustments deemed appropriate.

Normal operation of humidifier 1 is as follows: starting with humidifier 1 in a "stand-by" condition while the heating and ventilating system is in normal operation, when control unit 13 of humidifier 1 receives a call for humidity output from a humidity sensor in the system, it checks whether the fan for the compressed air supply is operating and actuates it if necessary. After 30 seconds, the compressor in compressed air supply 12 and the ultra-violet unit 9 are enabled for 2 minutes and then air solenoid valve 14 is opened allowing compressed air to pass along pipe 15 to sparge bar 11 under the control of air pressure regulator 16. Control unit 13 also monitors a pressure switch 17 which is located close to sparge bar 11 and is set to operated at 4.8x10⁵Pa (70 psi), i.e. the humidifier's operating pressure; having detected the operating of switch 17, control unit 13 allows 30 seconds to elapse so that a stable air flow through the nozzles is achieved, and then checks that the pressure is at 70 psi and thereafter water solenoid valve 18 is opened. In this way, water is fed to the nozzles only once an air pressure adequate for full atomisation is ensured. As main water control valve 19 is already open (having been actuated by control unit 13 upon receipt of the call for humidity), cleansed water can pass to the reservoirs 5 and on to the nozzles 2 where the air and water are mixed or atomised efficiently together to provide a very fine mist.

If, at the end of the 30 seconds after tripping of switch 17 the pressure is not 4.83x10⁵Pa (70 psi) (i.e. it has not stabilized) then the control unit 13 shuts the humidifier down.

Throughout the atomisation process, control unit 13 continually monitors and regulates the principal points in the operation in order to ensure that the correct degree of humidification is achieved. Thus for example, control unit 13 uses pressure switch 17 and regulator 16 to ensure that correct volumes and pressures of air are supplied to nozzles 2.

If at any time during operation switch 17 senses a reduction in the pressure, then valve 19 is closed.

As each nozzle 2 is supplied with water from its own separate reservoir 5, the rate of water supplied to the nozzle can be set at different values in order to take account of stratification of the air supply so as to ensure that the correct air to water ratio is supplied to each nozzle. Control unit 13 can be used to ensure that the correct water flow-rate for each nozzle/reservoir is maintained.

Proportional control of humidity is provided by pneumatic control valve 19 actuable by the heating and ventilating system and/or by control unit 13.

Clearly, a heating and ventilating system may require humidification at a number of spaced locations in which case minimisation of costs may be achieved by having a common water supply/treatment unit (i.e. to the output of steriliser 9) and a common air supply/drier unit which together feed a number of humidification units each of which has the remaining components of humidifier 1.

Humidifier 1 overcomes the environmental and public health problems associated with the prior art by providing a system in which the likelihood of bacteria existing is minimised. Moreover the operation of humidifier 1 can be precisely controlled and adjusted, and its running costs are approximately 10% that of conventional humidifiers incorporating electrical steam generators. Furthermore, the fine mist produced by the atomisation process at the nozzles minimise the amount of water left in the duct work and which would otherwise cause corrosive damage.

## Claims

1. Humidification apparatus comprising at least one nozzle means (2) to effect mixing of water and air, control means (13) to regulate the supply of water and air to the nozzle means, means (13, 19) to initiate the passage of water from a supply (6) to the nozzle means after establishing an air flow at the nozzle means characterised by means (13, 17) to determine stabilisation of the air flow at the operating pressure, the stabilisation means having means (17) to note that the air flow is at a predetermined air pressure a given time period after the predetermined pressure was first established, and the initiation means being operable in accordance with the stabilisation means indicating stability of the air pressure.

2. Apparatus according to Claim 1, characterised in that the stabilisation means comprises means (13, 17) to monitor for a predetermined air pressure in a first conduit means for the passage of air from a supply (12) to the nozzle means.

3. Apparatus according to Claim 1 or 2 characterised in that the given time period is in the range 15 to 60 seconds.

4. Apparatus according to Claim 1 or 2 characterised in that the given time period is in the range 20 to 40 seconds.

5. Apparatus according to any preceding Claim, characterised by means (13, 17, 19) to shut-down the supply of water to the nozzle if the air pressure in the first conduit means reduces to a second predetermined pressure.

6. Apparatus according to Claim 5, characterised in that the second predetermined pressure is in the range 0.75 to 0.95 of the predetermined pressure.

7. Apparatus, according to any preceding Claim, wherein the humidification apparatus has a plurality of nozzle means (2) each of which has a separate water reservoir (5) linked to it to provide precise and continual metering of water to the respective nozzle means.

8. Apparatus according to any preceding Claim, wherein the humidification apparatus comprises means to filter (7, 8) and/or to effect heat treatment (9) on the air and water supplied to the nozzle means.

9. A method of operating humidification apparatus having at least one nozzle means (2) to effect mixing of water and air, comprising initiating the passage of water to the nozzle means after establishing an air flow at the nozzle means, the method characterised by determining stabilisation of the air flow at the operating pressure, noting that the air flow is at a predetermined air pressure a given time period after the predetermined pressure was first established, and then initiating the passage of water from a supply (6) to the nozzle means.

10. A method according to Claim 9, characterised in that the stability determination stage comprises monitoring for a predetermined air pressure in a first conduit means for the passage of air from a supply (12) to the nozzle means.

11. A method according to Claim 9 or 10 characterised in that the given time period is in the range 15 to 60 seconds.

12. A method according to Claim 9 or 10 characterised in that the given time period is in the range 20 to 40 seconds.

## Patentansprüche

1. Befeuchtungsvorrichtung mit wenigstens einer Düseneinrichtung (2), um die Mischung von Wasser und Luft zu bewirken, einer Steuereinrichtung (13) zum Regeln der Zufuhr von Wasser und Luft zu der Düseneinrichtung, einer Einrichtung (13,19) zum Auslösen des Durchtritts von Wasser von einem Vorrat (6) zu der Düseneinrichtung nach Bildung eines Luftflusses an der Düseneinrichtung, **gekennzeichnet durch** eine Einrichtung (13,17) zur Feststellung der Stabilisierung des Luftflusses auf dem Betriebsdruck, wobei die Stabilisierungseinrichtung Mittel (17) umfaßt, um festzustellen, daß sich der Luftfluß auf einem vorbestimmten Luftdruck eine vorgegebene Zeitperiode, nachdem der vorbestimmte Druck zuerst gebildet wurde, befindet, wobei die Auslöseeinrichtung in Übereinstimmung mit der Stabilisierungseinrichtung betätigt wird, um die Stabilität des Luftdruckess anzuzeigen.

2. Vorrichtung nach Anspruch 1, **dadurch gekennzeichnet,** daß die Stabilisierungseinrichtung Mittel (13,17) umfaßt, um einen vorbestimmten Luftdruck in einer ersten Leitungseinrichtung für die Luftzuführung von einem Vorrat (12) zu der Düseneinrichtung zu überwachen.

3. Vorrichtung nach Anspruch 1 oder 2, **dadurch gekennzeichnet,** daß die vorgegebene Zeitperiode im Bereich von 15 bis 60 Sekunden liegt.

4. Vorrichtung nach Anspruch 1 oder 2, **dadurch gekekennzeichnet,** daß die vorgegebene Zeitperiode im Bereich von 20 bis 40 Sekunden liegt.

5. Vorrichtung nach irgendeinem vorangehenden Anspruch, **gekennzeichnet durch** Mittel (13,17,19) zur Abschaltung der Wasserzuführung zu der Düse, wenn der Luftdruck in der ersten Leitungseinrichtung auf einen zweiten vorbestimmten Druck vermindert ist.

6. Vorrichtung nach Anspruch 5, **dadurch gekennzeichnet,** daß der zweite vorbestimmte Druck im Bereich von 0,75 bis 0,95 des vorbestimmten Druckes liegt.

7. Vorrichtung nach irgendeinem vorhergehenden Anspruch, **dadurch gekennzeichnet,** daß die Befeuchtungsvorrichtung mehrere Düseneinrichtungen (2) aufweist, von denen jede mit einem getrennten Wasserreservoir (5) verbunden ist, um eine genaue und kontinuierliche Abmessung des Wassers zu der entsprechenden Düseneinrichtung vorzugeben.

8. Vorrichtung nach irgendeinem vorangehenden Anspruch, **dadurch gekennzeichnet,** daß die Befeuchtungsvorrichtung Mittel zur Filterung (7,8) und/oder zur Bewirkung einer Wärmebehandlung (9) der Luft und des Wassers, die der Düseneinrichtung zugeführt werden, umfaßt.

9. Verfahren zum Betrieb einer Befeuchtungsvorrichtung mit wenigstens einer Düseneinrichtung (2), um die Mischung von Wasser und Luft zu bewirken, umfassend die Auslösung des Wasserdurchtritts zu der Düseneinrichtung nach Bildung eines Luftflusses an der Düseneinrichtung, wobei das Verfahren gekennzeichnet ist durch die Feststellung der Stabilisierung des Luftflusses auf dem Betriebsdruck, die Feststellung, daß sich der Luftfluß auf einem vorbestimmten Druck eine vorgegebene Zeitperiode, nachdem der vorbestimmte Druck zuerst gebildet wurde, befindet und sodann Auslösung des Wasserdurchganges von einem Vorrat (6) zu der Düseneinrichtung.

10. Verfahren nach Anspruch 9, **dadurch gekennzeichnet,** daß die Stabilitäts-Feststellstufe die Überwachung eines vorbestimmten Luftdruckes in einer ersten Leitungseinrichtung für den Durchgang von Luft von einem Vorrat (12) zu der Düseneinrichtung umfaßt.

11. Verfahren nach Anspruch 9 oder 10, **dadurch gekennzeichnet,** daß die vorgegebene Zeitperiode im Bereich von 15 bis 60 Sekunden liegt.

12. Verfahren nach Anspruch 9 oder 10, **dadurch gekennzeichnet,** daß die vorgegebene Zeitperiode im Bereich von 20 bis 40 Sekunden liegt.

## Revendications

1. Dispositif d'humidification comportant au moins des moyens formant buses (2) pour exécuter le mélange d'eau et d'air, des moyens de commande (13) pour régler l'envoi d'eau et d'air aux moyens formant buses, des moyens d'adresse (13, 19) pour déclencher le passage d'eau depuis une alimentation (6) jusqu'aux moyens formant buses après l'établissement d'un courant d'air dans les moyens formant buses, caractérisé par des moyens (13, 17) pour déterminer la stabilisation du courant d'air à la pression de fonctionnement, les moyens de stabilisation comprenant des moyens (17) pour indiquer que le courant d'air est à une pression d'air prédéterminée pendant un intervalle de temps donné une fois que la pression prédéterminée a été établie, et les moyens de déclenchement étant aptes à fonctionner en fonction des moyens de stabilisation indiquant la stabilité de la pression de l'air.

2. Dispositif selon la revendication 1, caractérisé en ce que les moyens de stabilisation comprennent des moyens (13,17) pour contrôler une pression d'air prédéterminée dans des premiers moyens formant conduit pour le passage de l'air d'une source d'alimentation (12) aux moyens formant buses.

3. Dispositif selon la revendication 1 ou 2, caractérisé en ce que l'intervalle de temps donné se situe dans la gamme de 15 à 60 secondes.

4. Dispositif selon la revendication 1 ou 2, caractérisé en ce que l'intervalle de temps donné se situe dans la gamme de 20 à 40 secondes.

5. Dispositif selon l'une quelconque des revendications précédentes, caractérisé par des moyens (13, 17, 19) pour interrompre l'envoi d'eau à la buse si la pression d'air dans les premiers moyens formant conduit tombe à une seconde pression prédéterminée.

6. Dispositif selon la revendication 5 caractérisé en ce que la seconde pression prédéterminée se situe dans la gamme de 0,75 à 0,95 fois la pression prédéterminée.

7. Dispositif selon l'une quelconque des revendications précédentes, dans lequel le dispositif d'humidification possède une pluralité de moyens formant buses (2), dont chacun possède un réservoir d'eau séparé (5) qui lui est raccordé de manière à réaliser un envoi d'eau continu et dosé de façon précise aux moyens formant buses respectifs.

8. Dispositif selon l'une quelconque des revendications précédentes, dans lequel le dispositif d'humidification comporte des moyens pour filtrer (7, 8) et/ou appliquer un traitement thermique (9) à l'air et à l'eau, qui sont envoyés aux moyens formant buses.

9. Procédé pour faire fonctionner un dispositif d'humidification comportant au moins un moyen formant buse (2) pour exécuter le mélange d'eau et d'air, comprenant l'étape consistant à déclencher l'envoi d'eau aux moyens formant buses après l'établissement d'un courant d'air dans les moyens formant buses, le procédé étant caractérisé en ce qu'il comporte les étapes consistant à déterminer la stabilisation du courant d'air à la pression de fonctionnement, indiquer que le courant d'air à une pression prédéterminée de l'air pendant un intervalle de temps donné une fois que la pression prédéterminée a été tout d'abord établie, puis déclencher l'envoi de l'eau depuis une source d'alimentation (6) aux moyens formant buses.

10. Procédé selon la revendication 9, caractérisé en ce que l'étape de détermination de stabilité consiste à contrôler, pour une pression prédéterminée de l'air dans des premiers moyens formant conduit, l'envoi d'air depuis une source d'alimentation (12) jusqu'aux moyens formant buses.

11. Procédé selon la revendication 9 ou 10, caractérisé en ce que l'intervalle de temps donné se situe dans la gamme de 15 à 60 secondes.

12. Procédé selon la revendication 9 ou 10, caractérisé en ce que l'intervalle de temps donné se situe dans la gamme de 20 à 40 secondes.
